# EUROPEAN PATENT APPLICATION

(11) **EP 2 797 046 A1**
(43) Date of publication of application: **29.10.2014**
(21) Application number: 13382154.6
(22) Date of filing: 25.04.2013
(51) Int. Cl.: G06Q 30/08, G06Q 10/10, G06Q 50/00

(54) **Method for exchanging personal information between users sharing a social space**

(71) Applicant: Telefonica Digital España, S.L.U., 28013 Madrid (ES)
(72) Inventor: Neystadt, John, 28013 Madrid (ES); Navon, Erez, 28013 Madrid (ES); Ratson, Reut, 28013 Madrid (ES)
(74) Representative: Carpintero Lopez, Francisco

(57) **Abstract**

Present invention refers to a method for exchanging personal information of users of a service where each user has at least one profile containing personal information, the method comprises the steps of: organizing the personal information of the profile of a first user in predefined groups of attributes to be shared in successive steps, being the information of a first group available for all the users of the service; sending a location of the first user to a server; comparing at the server the location sent by the first user with the locations of other users of the service; filtering the profiles of the users according to their locations; matching the filtered profiles against a set of preferences previously defined by the first user; sending a message with the personal information of a second group of attributes from the first user to the matched users requesting for an answer; and a second user from the matched users answering to the first user by sending to him the personal information of his second group of attributes.

## Description

### TECHNICAL FIELD OF THE INVENTION

Present invention generally relates to online social interactions and more specifically to assist people who share a physical space and have a similar social situation to exchange personal information controlling the exposure degree of their personal information.

### BACKGROUND OF THE INVENTION

The process of matching two people, who a priori are a totally stranger to each other, has been a goal for many solutions along the years. Online dating has increased their activity year after year together with the development of the technology and communication services. Nowadays, the number of people registered in any of the services available can be counted in hundreds of millions. The demanding of online social interaction services are continuously growing, in fact, as the popularity of these kind services increases, mobile dating has also come up as a choice for people who want an instant interaction instead of being waiting sitting in front of a PC. This way, people are allowed to chat, flirt, meet and even become intimately involved by means of text messages, web...

These services allow their users to provide information about themselves in a short profile which is either stored in their phones as a dating ID or as a username on the mobile dating site. They can then search for other IDs online or by calling a certain phone number dictated by the service. The criteria include age, gender and sexual preference.

Mobile dating websites, in order to increase the opportunities for meeting, focus attention on users that share the same social network and proximity. Some companies even offer services such as *homing devices to* alert users when another user is within a distance of, for example, thirty feet. Some systems involve bluetooth technology to connect users in locations such as bars and clubs. This is known as proximity dating. These systems are actually more popular in some countries in Europe and Asia than traditional online dating. With the advent of GPS Phones and GSM localization, proximity dating is likely to rise sharply in popularity. Actually, in many social situations as conferences, pubs, airport lounges, etc, people are interested in getting in contact with other people sharing the same social space. A social space is a physical space such as any gathering place where people gather and interact. Some social spaces such as town squares or parks are public places; others such as pubs or shopping malls are privately owned and regulated, but all of them have in common that are full of people willing to gather and interact with other people who seek the same purpose (as business or dating for example).

Existing solutions as US 20120297003 or US 201110091352 describes methods to interchange personal information step by step, but are not complete solutions in the sense of such complex solutions fail when what is required is a quick matching of people sharing a physical space and a similar social situation.

The lack of information about other sides and concerns of disclosing too much information about yourself are the main drawbacks of these services. Therefore it is missing in the prior art a solution which allows efficiently control the exposure of information and, in turn, help the users to know basic data of other users in the same social space just to help users to get in touch and eventually interact beyond the online world.

### SUMMARY OF THE INVENTION

Present invention solves the aforementioned problem of control the exposure degree of personal information by presenting a method for exchanging personal information of users of a service where each user has at least one profile containing personal information, the method is characterized by comprising the following steps:
a) organizing the personal information of the at least one profile of a first user in predefined groups of attributes to be shared in successive steps, being the information of a first group available for all the users of the service;
b) sending a location of the first user to a server;
c) comparing at the server the location sent by the first user with the locations sent by other users of the service;
d) filtering the profiles of the users according to their locations. The proximity to the first user is configurable and may be adjusted to obtain more results as less distance is required;
e) matching the filtered profiles against a set of preferences previously defined by the first user;
f) sending a message with the personal information of a second group of attributes from the first user to the matched users requesting for an answer;
g) a second user from the matched users answering to the first user by sending to him the personal information of his second group of attributes.

The invention may comprise an additional step where a user amends partially or removes some information from a group of attributes before sending to other users.

The users may have multiple profiles fitting for different social situations. According to different embodiments of the invention the profiles are selected manually or automatically. In the case of the automatically selection, the criteria may depend on the time, date or any specific event previously defined by the user. In another embodiment of the invention, the selection of the profile depends on the location of the users and, said location is then compared with other locations stored in a database, where the locations are already classified.

Optionally, in one embodiment of the invention, it is comprised the step of sending a notification message to the user when it is detected a change in his location. In this case the user is prompted to change the profile to another that probably fits better to the next location.

The groups of attributes are exchanged in successive messages between the first user and the second user and, according to one embodiment of the invention. The messages sent may be implemented over SIP, XMPP, web/SMTP or any other messaging protocol. Alternatively, the users may establish a communication through any communication service after some exchanges. The messages and communications between users may be carried out using a Smartphone, a tablet or any mobile device.

In one embodiment of the invention, it is used a location-based web service to carry out the steps of sending a location of the first user to a server; comparing at the server the location sent by the first user with the locations sent by other users of the service; and filtering the profiles of the users according to their locations. These services are also called "check in" services and, once a user sends a message to the service sharing his location, the service provides the user the profiles of other user nearby.

According to particular embodiments of the invention, the multiple profiles of a user are classified following a "purpose field", being said purpose field selected from any social situation as "work", "family" or "dating", indicating what is what the user is looking for.

Optionally, the personal information contained in a profile, may comprise the following attributes organized in different groups: name, photo, age, work, company, department, address, family status, hobbies.

Another aspect of the invention refers to a system for exchanging personal information of users of a service where each user has at least one profile containing personal information, the system is characterized by comprising a server configured for:
- organizing the personal information of the at least one profile of a first user in predefined groups of attributes to be shared in successive steps, being the information of a first group available for all the users of the service;
- receiving a location of the first user;
- comparing the location received with the locations of other users of the service;
- filtering the profiles of the users according to their locations;
- matching the filtered profiles against a set of preferences previously defined by the first user;
- sending messages with personal information of a second group of attributes from the first user to the matched users requesting for an answer;
- receiving answers from any of the matched users containing personal information of their second group of attributes;
- sending the answers to the first user.

A last aspect of the invention refers to a computer program product comprising computer program code adapted to perform the method of the invention, when said program code is executed on a computer, a digital signal processor, a field-programmable gate array, an application-specific integrated circuit, a micro-processor, a micro-controller, or any other form of programmable hardware.

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:
**Figure 1****.-** shows a block diagram of one embodiment of the invention.
**Figure 2****.-** shows a one of specific possible implementation of the invention over SIP.

### DETAILED DESCRIPTION OF THE INVENTION

The invention describes a process for, in general terms, exchanging personal information between users located in a same social space. The method enable users to create multiple profiles containing personal information about themselves and control the exposure degree of their personal information when receiving a request for a personal information exchange from other users of the service.

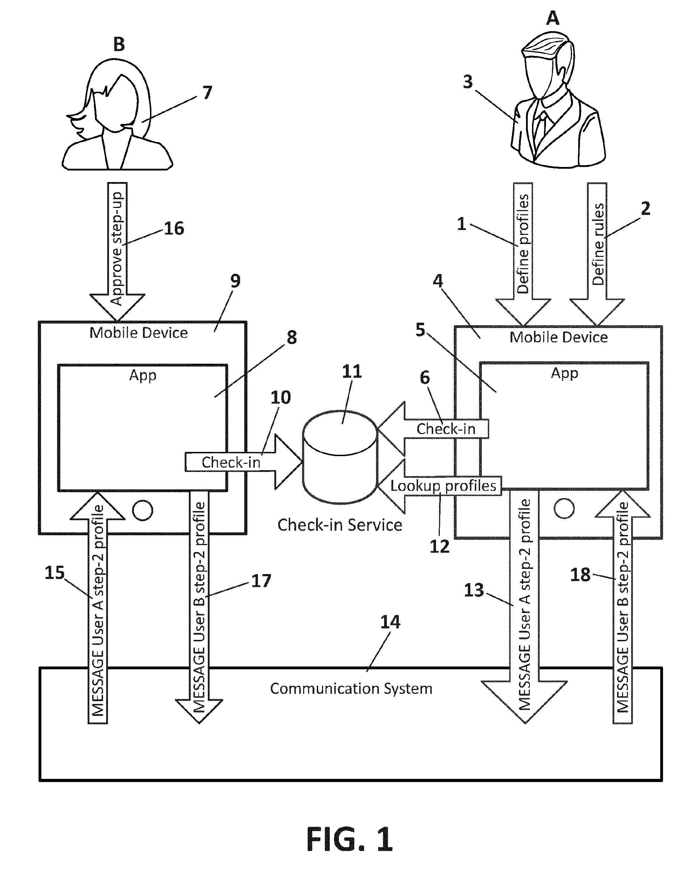

According to a particular embodiment of the invention and as can be seen in Figure 1, the first step is the creation of a profile (1) and rules (2) for the coming search. A user A (3) with some kind of mobile device (4), as a smartphone for instance, using a mobile social meetup application (5) creates one or more profiles containing personal information. Each profile describes personal information about the user, being said information organized in groups of attributes to be shared in successive steps. The user gives values, such as name, age, picture, etc, defining for which purpose each profile can be used for, and which group of attributes can be shared in each step up. Multiple profiles can be created for different social situations - business conference, bar-dating, parenting event in a school. Below is an example of 3 profiles that a user has defined for different purposes:

| **Profile 1:** | **Used For** | **Business** |
|---|---|---|
| Step 1: | Name: | John Doe |
| | Company: | Telefonica Digital |
| | Photo | <image> |
| Step 2: | Department | Jajah |
| | Position | Architect |

| **Profile 2:** | **Used For** | **Parenting** |
|---|---|---|
| Step 1: | Name: | John Doe |
| | Father of: | Bob Marley |
| Step 2: | Photo | <image> |
| | Address | Kfar-Saba, Jabotinsky street |
| | Also father of | John Lennon, Madonna, Ofra Winfrey |

| **Profile 3:** | **Used For** | **Dating** |
|---|---|---|
| Step 1: | Name: | John Doe |
| | Age: | 40 |
| Step 2: | Family Status | Divorced |
| | Looking for | Serious Relationship |
| Step 3: | Photo | <image> |
| | Occupation | Software Engineer |
| | Company | Telefonica Digital |

Successive steps are created to control the exposure of personal information. As two users start to exchange basic information (groups of attributes belonging to step 1 and/or 2) and feel some kind of confidence, interest or attraction, successive steps can be shared to know one another deeply and probably, if the interested is kept by both users, they finally would meet in person or start to communicate through another communication service as a simple call or a videoconference. Otherwise, if at some point the interest is lost, they can just stop exchanging information.

Following with Figure 1, once the profiles have been created, user A activates through a mobile application one of them. According to different embodiments the selection of the profile is done in a different way. It can be manually selected by the user or it can be automatically matched the place type (e.g. restaurant, conference call, university, etc) with the profile with the purpose field which fits better. The place type can be determined via a predefined database from web services that catalogs places, such as Fourthsquare, Google Places, Facebook, etc.

In addition, a content information of what user is doing can be determined according day of the week (work day/weekened), time of the day (business, leisure), contents of user's calendar (e.g. personal vs bussiness meeting) and used to map between personal to business profiles. The user may also set a specific time, date or programming any specific event to automatically select one profile to be active. Synchronization with an agenda may be the best option for some cases.

The location of user A is sent (6) to a server (11) together with a selected profile, for instance, and according to the embodiment of figure 1, a check-in service can be used to transmit his current location, as indicated by a location module available in his smartphone or mobile device based on GPS, Wifi triangulation, IP address lookup or other mean.

Location changes, larger than a configurable distance, may be detected in some embodiments or depending on the user preferences the user is prompted to checkout or check-in with a different profile.

A user B (7) repeats the same process than user A. Using a mobile application (8) downloaded to his smartphone or mobile device (9) create his own profiles and queries (10) the check-in service, as mentioned before, for other check-ins in the same social space and with profiles according to his predefined rules and purposes that he has activated (e.g. business, parenting, dating, or others).

User A, through the mobile application (5), has defined some rules (2) for a search. The rules comprise a criteria mainly based on the purpose of the profiles, but it can be also more specific for advanced searches and include ranges for the values of attributes, discard some cases or focus on a specific attribute as age for example. The profiles of the other users are compared with the location of user A, filtering the profiles sharing a same social space with user A and finally selecting (12), according to the rules defined by user A, some of the filtered profiles since the basic information of other users of the service, as user B, are available. The selection is done manually in some embodiments, but the embodiment of figure 1 considers another option that consists on automatically sending a message (13) to all the users whose profiles match with the rules defined by user A. The messages comprise, besides the personal information contained in the first group of attributes which is available for all the users of the service, the personal information contained in a second group of attributes. It is a step-2 exchange of information where user A is requiring the same level of personal information to said users. Messaging can be sent over any existing communication system (14) and all messages can be implemented using one of existing communication protocols, such as SIP, XMPP, Email (Web/SMTP) or other.

When other user, for example user B, receives (15) a message with User A step-2 information of the chosen profile, he can choose to refuse or approve further step-up (16) and send step-2 information about himself (17) and even with additional information (text, attachments, etc).

In the case that user A receives the personal information (18) from user B, he can repeat the step-up process or starting a communication using regular messaging mechanisms as a phone call, a videoconference or even arrange a personal meeting.

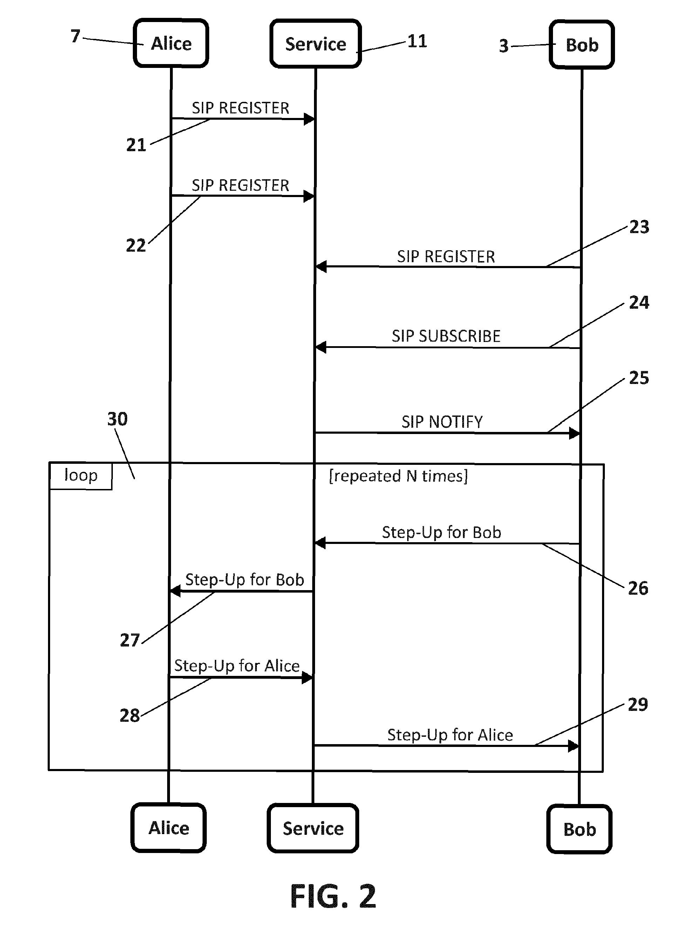

In Figure 2 it is represented a specific implementation over SIP:
1. User A (Alice) creates a profile and sends a SIP REGISTER message (21) to a check-in service with her personal profile. Check-in includes a step-1 profile information, such as age.
   REGISTER chechin@meetup
   From: Alice@service
   <xml><checkin
   profileName=AlicePersonakage>32</age>...<checkin/></xml>
2. Alice's mobile application sends an additional SIP REGISTER message (22) to the check-in service with a step-2 profile, with personal information of a second group of attributes, for a business user. The check-in includes a step-1 profile information such as company:
   REGISTER checkin@meetup
   From: Alice@service
   <xml><checkin profileName=AliceBusines><company>Telefonica
   Digital</company> ...<checkin/></xml>
3. Bob's (user B) mobile application sends a SIP REGISTER message (23) to the check-in service with his profile:
   REGISTER checkin@meetup
   From: Bob@service
   <xml> profileName=Bob ...<checkin/></xml>
4. Bob's mobile application sends a SIP SUBSCRIBE message (24) to the checkin service, including the rules for the search of other users, for example "age>30".
   From: Bob@service
   <xml>accept-profile>
   <param age=">30"/>
   </accept-profile</xml>
5. The check-in service detects that a user matching the criteria has registered in the service (before or after Bob's subscription to the service) and sends Bob s SIP NOTIFY (25) message with the personal information of Alice profile.
   MESSAGE Alice@service
   From: checkin@service
   <xml><profile name=AlicePersonal>...</profile></xml>
6. Bob accesses to step-1 personal information of Alice, comprising the first group of attributes of her profile. Then Bob indicates that he is interested and through his mobile application, sends his step-1 information profile together with additional SIP MESSAGE (26).
   MESSAGE Alice@service
   From: Bob@service
   <xml><profile>...</profile></xml>
7. The check-in service forward (27) the previous MESSAGE to Alice
   MESSAGE Alice@service
8. Alice's mobile application displays the profile of Bob on her smartphone.
   Then Alice decides that she is interested and the mobile application running on her smartphone sends (28) the step-2 personal information of her profile to the check-in service including additional details, for example her photo and town where she lives.
   MESSAGE Alice@service
   From: Alice@service
   <xml><profile><town/><image/>...</profile></xml>
9. The check-in service forwards (29) the previous message to Bob
   MESSAGE Alice@service
10. Steps 26-29 are repeated as many times as needed in a loop (30) until Bob and Alice decide to start a communication through any other traditional communication service instead of the step by step exchange of information.

## Claims

1. Method for exchanging personal information of users of a service where each user has at least one profile containing personal information, the method is **characterized by** comprising the following steps:
a) organizing the personal information of the at least one profile of a first user in predefined groups of attributes to be shared in successive steps, being the information of a first group available for all the users of the service;
b) sending a location of the first user to a server;
c) comparing at the server the location sent by the first user with the locations sent by other users of the service;
d) filtering the profiles of the users according to their locations;
e) matching the filtered profiles against a set of preferences previously defined by the first user;
f) sending a message with the personal information of a second group of attributes from the first user to the matched users requesting for an answer;
g) a second user from the matched users answering to the first user by sending to him the personal information of his second group of attributes.

2. Method according to claim 1 further comprising the first or the second user amending or removing some information from a group of attributes before sending to other users.

3. Method according to any one of previous claims wherein the user has multiple profiles, further comprising the step of manually selecting one of the multiple profiles.

4. Method according to any one of claims 1-2wherein the user has multiple profiles further comprising the step of automatically selecting one of the multiple profiles depending on time, date or any specific event previously defined by the user.

5. Method according to any one of claims 1-2 wherein the user has multiple profiles further comprising the step of automatically selecting one of the multiple profiles depending on the location of the user, comparing said location with a database of classified locations.

6. Method according to any one of previous claims wherein the user has multiple profiles ,further comprising notifying the user a change in the location prompting him to change the profile.

7. Method according to any one of the previous claims further comprising exchanging alternatively information of successive groups of attributes in successive messages between the first user and the second user.

8. Method according to any one of previous claims further comprising establishing a communication between the first user and the second user through any communication service.

9. Method according to any one of the previous claims wherein the messages sent are implemented over SIP, XMPP, web/SMTP or any other messaging protocol.

10. Method according to any one of the previous claims wherein the messages are exchanged between users using a Smartphone, a tablet, or any mobile device.

11. Method according to claim 1 wherein the steps b) c) and d) are done through a location-based web service, also called "check in" services.

12. Method according to any one of previous claimswherein the user has multiple profiles fitting for different social situations and the multiple profiles are classified according to a purpose field, said purpose field is selected from "work", "family", "dating" or any other social situation.

13. Method according to any one of the previous claims wherein the personal information contained in a profile comprise the following attributes organized in different groups: name, photo, age, work, company, department, address, family status, hobbies.

14. System for exchanging personal information of users of a service where each user has at least one profile containing personal information, the system is **characterized by** comprising a server configured for:
- organizing the personal information of the at least one profile of a first user in predefined groups of attributes to be shared in successive steps, being the information of a first group available for all the users of the service;
- receiving a location of the first user;
- comparing the location received with the locations of other users of the service;
- filtering the profiles of the users according to their locations;
- matching the filtered profiles against a set of preferences previously defined by the first user;
- sending messages with personal information of a second group of attributes from the first user to the matched users requesting for an answer;
- receiving answers from any of the matched users containing personal information of their second group of attributes;
- sending the answers to the first user.

15. A computer program product comprising computer program code adapted to perform the method according to any of the claims 1-13 when said program code is executed on a computer, a digital signal processor, a field-programmable gate array, an application-specific integrated circuit, a micro-processor, a micro-controller, or any other form of programmable hardware.
